(19) Europäisches Patentamt
European Patent Office
Office européen des brevets

(11) **EP 4 108 746 A1**

(12) **EUROPEAN PATENT APPLICATION**
published in accordance with Art. 153(4) EPC

(43) Date of publication:
**28.12.2022 Bulletin 2022/52**

(21) Application number: **20920513.7**

(22) Date of filing: **18.12.2020**

(51) International Patent Classification (IPC):
**C10M 171/00** (2006.01)    **C10N 20/00** (2006.01)
**C10N 30/00** (2006.01)    **C10M 127/04** (2006.01)
**C10M 129/20** (2006.01)    **C10M 129/70** (2006.01)
**C10M 133/12** (2006.01)    **G01N 21/64** (2006.01)

(52) Cooperative Patent Classification (CPC):
**C10M 127/04; C10M 129/12; C10M 129/20;
C10M 129/70; C10M 133/12; C10M 169/04;
C10M 171/00; G01N 21/64**

(86) International application number:
**PCT/JP2020/047346**

(87) International publication number:
**WO 2021/166409 (26.08.2021 Gazette 2021/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.02.2020 JP 2020028061**

(71) Applicant: **Idemitsu Kosan Co., Ltd
Tokyo 100-8321 (JP)**

(72) Inventors:
• **YOKOMIZO Masato**
**Chiyoda-ku, Tokyo 100-8321 (JP)**
• **ITO Koki**
**Chiyoda-ku, Tokyo 100-8321 (JP)**
• **TORII Hidenori**
**Chiyoda-ku, Tokyo 100-8321 (JP)**
• **KATO Shota**
**Chiyoda-ku, Tokyo 100-8321 (JP)**
• **OKUYAMA Genki**
**Chiyoda-ku, Tokyo 100-8321 (JP)**

(74) Representative: **Vossius & Partner
Patentanwälte Rechtsanwälte mbB
Siebertstraße 3
81675 München (DE)**

(54) **DETERIORATION MEASUREMENT DEVICE, SYSTEM, METHOD, AND LUBRICANT OIL COMPOSITION**

(57) A lubricating oil composition comprises a fluorescent compound that emits fluorescent light. The fluorescent compound has a property of deteriorating with relevance to deterioration of the lubricating oil composition.

Fig. 1

**Description**

Technical Field

The present invention relates to a device, a system, and
a method for measuring deterioration of liquid, and a lubricating oil composition used for these.

Background Art

There is conventionally known a lubricating oil deterioration sensor which causes detection light to transmit through a lubricating oil intruding into a predetermined gap, detects color information of the detection light having transmitted through the lubricating oil with a light-receiving element, and amplifies the detection value detected by the light-receiving element with a logarithmic function to grasp the deterioration state of the lubricating oil using the amplified value (Patent Literature 1). Since as compared with a detection value amplified with a linear function, a detection value amplified with a logarithmic function is larger in its amount of change relative to the amount of change of a transmittance also in a region where the transmittance is low, the transmittance can be accurately grasped and detection accuracy of the deterioration state of the lubricating oil can be maintained even for the lubricating oil that is low in transmittance.

Citation List

Patent Literature

Patent Literature 1: International Publication No. WO 2015/060457

Summary of Invention

Technical Problem

However, in a deterioration process of a lubricating oil, the intensity of detection light having caused to transmit through the lubricating oil is complexly affected by, in addition to the amount(s) of deterioration product(s) of the lubricating oil, the amount(s) of additive(s) remaining, and furthermore, metal powder, carbon, water, and the like as external factors. There is a possibility that due to these factors, the intensity of the detection light obtained does not necessarily coincide with the degree of deterioration of the lubricating oil. There are being required a device, a system, and a method capable of grasping deterioration of a lubricating oil composition even in such a circumstance, and a lubricating oil composition used for these.

Solution to Problem

The present invention provides deterioration measurement device, system, and method, and a lubricating oil composition. Specific aspects of the present invention are presented as in [1] to [14] below.

[1] A lubricating oil composition including a fluorescent compound that emits fluorescent light, wherein
the fluorescent compound has a property of deteriorating with relevance to deterioration of the lubricating oil composition.
[2] The lubricating oil composition according to [1] above, wherein the fluorescent compound is a heteroaromatic compound such as a coumarin-based compound, a rhodamine-based compound, or an auramine-based compound, or a carbon aromatic compound such as a terphenyl-based compound.
[3] The lubricating oil composition according to [1] or [2] above, wherein a wavelength of the fluorescent light emitted by the fluorescent compound is not less than 300 nm and not more than 800 nm.
[4] The lubricating oil composition according to according to any one of [1] to [3] above, wherein a ratio of the fluorescent compound in the lubricating oil composition is not less than 0.1 mass ppm and not more than 100 mass ppm relative to a total amount of the lubricating oil composition.
[5] A deterioration measurement device including:

a light emitter that emits irradiation light toward a measurement target object including a fluorescent compound that emits fluorescent light upon reception of the irradiation light;
a light receiver that receives the fluorescent light emitted by the fluorescent compound and transmits a signal in accordance with the received fluorescent light; and

a sensor that senses deterioration of the measurement target object on the basis of the signal transmitted by the light-receiving unit.

[6] The deterioration measurement device according to [5] above, wherein the fluorescent compound is a coumarin-based compound, a rhodamine-based compound, an auramine-based compound, or a terphenyl-based compound.
[7] The deterioration measurement device according to [5] or [6] above, wherein the light emitter includes an LED, a fluorescence tube, an HID lamp, or a CDM lamp.
[8] The deterioration measurement device according to any one of [5] to [7] above, wherein the light receiver includes a photomultiplier, a CMOS image sensor, an InGaAs image sensor, a photodiode, a phototransistor, or a photoelectric tube.
[9] The deterioration measurement device according to any one of [5] to [8] above, wherein the light receiver measures a fluorescence intensity of the fluorescent light emitted by the fluorescent compound.
[10] The deterioration measurement device according to any one of [5] to [9] above, wherein the sensor senses that the lubricating oil composition has deteriorated, when a fluorescence intensity of the fluorescent light emitted by the fluorescent compound is less than a predetermined threshold.
[11] The deterioration measurement device according to any one of [5] to [10] above, further including a reporter that externally reports that the lubricating oil composition has deteriorated, when the sensor determines that the lubricating oil composition has deteriorated.
[12] A deterioration measurement system including: the lubricating oil composition according to any one of [1] to [4] above; and the deterioration measurement device according to any one of [5] to [11] above.
[13] An automobile including the deterioration measurement device according to any one of [5] to [11] above.
[14] A deterioration measurement method including:

a step of emitting irradiation light toward a measurement target object including a fluorescent compound that emits fluorescent light in response to the irradiation light;
a step of receiving the fluorescent light emitted by the fluorescent compound;
a step of transmitting a signal in accordance with the received fluorescent light; and
a step of sensing deterioration of the lubricating oil composition on the basis of the transmitted signal.

Advantageous Effects of Invention

According to deterioration measurement device, system, and method, and a lubricating oil composition for measuring deterioration of liquid according to a preferable aspect of the present invention, deterioration of a lubricating oil composition used for various uses can be grasped.

Brief Description of Drawings

[Figure 1] Figure 1 is a schematic diagram showing an example of a deterioration measurement system according to the present invention.
[Figure 2] Figure 2 is a schematic diagram showing an example of an automobile having the deterioration measurement system according to the present invention mounted.
[Figure 3] Figure 3 is a flowchart including a deterioration measurement method according to the present invention.
[Figure 4] Figure 4 is a graph showing change of the acid number of a lubricating oil composition.
[Figure 5] Figure 5 is a graph showing change of the fluorescence intensity of a fluorescent compound.
[Figure 6] Figure 6 is a graph showing relation between the acid number of the lubricating oil composition and the fluorescence intensity of the fluorescent compound.

Description of Embodiments

[Configuration of Lubricant Oil Composition]

First, a lubricating oil composition according to an embodiment of the present invention is described. The lubricating oil composition used for the present invention includes a fluorescent compound which emits fluorescent light. The fluorescent compound is a substance which emits light upon reception of electromagnetic waves such as light, ultraviolet rays, and X-rays or particle beams, and has a property of deteriorating with relevance to deterioration of the lubricating oil composition. The lubricating oil composition is characterized in that its deterioration state can be grasped by measuring the fluorescent light emitted by the fluorescent compound.

The fluorescent compound used in an aspect of the present invention is preferably a heteroaromatic compound such as a coumarin-based compound, a rhodamine-based compound, or an auramine-based compound, or a carbon aromatic compound such as a terphenyl-based compound, and is still preferably the heteroaromatic compound.

The fluorescent compound has a property of deteriorating due to the similar deterioration factor(s) to that(those) of the lubricating oil composition, such, for example, as pressure, heat, oxygen and/or mechanical shear, catalytic action with water and metal, and/or the like, and accordingly, lowering in its fluorescence intensity, and has a property of not being affected by the other component(s) included in the lubricating oil composition, such, for example, as additive(s).

The wavelength of the fluorescent light emitted by the fluorescent compound is on the long wavelength side, and is preferably not less than 300 nm and not more than 800 nm, still preferably not less than 330 nm and not more than 750 nm, further preferably not less than 350 nm and not more than 700 nm.

The ratio of the fluorescent compound in the lubricating oil composition is preferably not less than 0.1 mass ppm and not more than 100 mass ppm, still preferably not less than 0.5 mass ppm and not more than 50 mass ppm, further preferably not less than 1 mass ppm and not more than 50 mass ppm, with the total amount (100 mass%) of the lubricating oil composition being as a reference.

The intensity of the fluorescent light emitted by the fluorescent compound correlates with deterioration of the lubricating oil composition. When the lubricating oil composition deteriorates, the fluorescent compound accordingly also deteriorates. The deterioration of the lubricating oil composition exhibits a rise of its acid number and/or a fall of its base number, and the deterioration of the fluorescent compound exhibits a fall of the fluorescence intensity. In other words, as the acid number rises or the base number falls, the fluorescence intensity also falls. Therefore, relationship between the acid number or the base number and the fluorescence intensity is examined and recorded in advance. Then, the deterioration of the lubricating oil composition is predicted in accordance with the fluorescence intensity. Moreover, since a remaining lifetime measured by the RBOT test (JIS K2514-3:2013) (hereinafter expressed as RBOT remaining lifetime) is proportional to the remaining amounts, for example, of various oxidation inhibitors, it correlates with the fluorescence intensity as with the rise of the acid number and the fall of the base number. In other words, the fluorescence intensity falls as the RBOT remaining lifetime decreases, as with the fluorescence intensity falling as the acid number rises or the base number falls. Therefore, the RBOT remaining lifetime can be used for determining the deterioration of the lubricating oil composition, by a technique similar to that for the acid number or the base number.

It is sufficient for the lubricating oil composition used in an aspect of the present invention to include a base oil and/or an additive for lubricating oil and to be prepared such that the content of the fluorescent compound is in the aforementioned range, and it can contain the base oil and the additive for lubricating oil that are properly selected depending on its use.

The lubricating oil composition according to the present invention is used for uses such as lubrication, thermal processing, cooling, thermal media, and insulation for an internal combustion engine, a transmission, differentials, a gas engine, a motor, a gas turbine, hydraulics, a freezer, a rolling process, and/or a sliding surface. Internal combustion engines include a gasoline engine, a diesel engine, and the like.

Hereafter, the base oil and/or the additive for lubricating oil that can be included in the lubricating oil composition used in an aspect of the present invention will be described.

<Base Oil>

Examples of the base oil included in the lubricating oil composition used in an aspect of the present invention include one kind or more selected from mineral oils and synthetic oils.

Examples of the mineral oils include atmospheric residues obtained through atmospheric distillation of crude petroleum such as a paraffin-based crude petroleum, an intermediate group-based crude petroleum, and a naphthene-based crude petroleum; distillates obtained through reduced-pressure distillation of any of these atmospheric residues; refined oils each obtained through one or more of refining processes on any of the distillates, such as solvent deasphalting, solvent extraction, hydrocracking, solvent dewaxing, catalytic dewaxing, and hydrorefining; and the like.

Examples of the synthetic oils include poly-$\alpha$-olefins such as $\alpha$-olefin homopolymers, or $\alpha$-olefin copolymers (for example, copolymers of $\alpha$-olefins with 8 to 14 of carbon numbers, such as an ethylene-$\alpha$-olefin copolymer); isoparaffins; polyalkylene glycols; ester-based oils such as polyol esters, dibasic acid esters, and phosphoric acid esters; ether-based oils such as polyphenyl ether; alkylbenzenes; alkylnaphthalenes; synthetic oils (GTLs) each obtained through isomerization of wax produced by the Fischer-Tropsch method or the like from natural gas (GTL wax (Gas To Liquids WAX)); and the like.

Among these, the base oil used in an aspect of the present invention preferably includes one kind or more selected from mineral oils that are categorized into Group 2 and Group 3 of the API (American Petroleum Institute) base oil categories and synthetic oils.

<Additive for Lubricant Oil>

The lubricating oil composition used in an aspect of the present invention may contain an additive for lubricating oil other than the aforementioned components depending on its use to such an extent that the effect(s) of the present invention is(are) not impaired.

Examples of the additive for lubricating oil other than the aforementioned components include a pour point depressant, a viscosity index improver, an extreme-pressure agent, an oxidation inhibitor, a metal-based detergent, an ashless dispersant, an antiwear agent, a demulsifier, a friction modifier, a rust preventive agent, a metal deactivator, an antistatic agent, a defoaming agent, and the like. Each of these additives for lubricating oil may be solely used or two kinds or more of these may be used together.

While the contents of these additives for lubricating oil may be properly prepared to such an extent that the effect(s) of the present invention is(are) not impaired, that of each additive is independently typically 0.001 to 15 mass%, preferably 0.005 to 10 mass%, still preferably 0.01 to 5 mass%, with the total amount (100 mass%) of the lubricating oil composition being as a reference.

[Deterioration Measurement System and Deterioration Measurement Device]

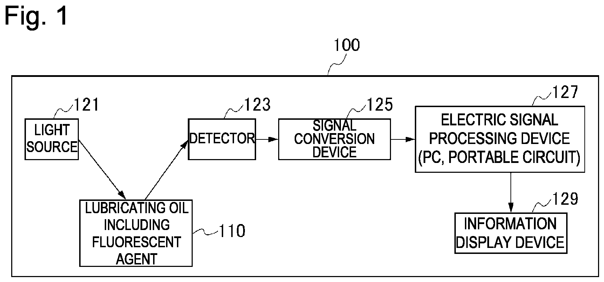

A deterioration measurement system 100 and a deterioration measurement device 120 are described using Figure 1. The deterioration measurement system 100 mainly includes a lubricating oil composition 110 and the deterioration measurement device 120. The deterioration measurement device 120 mainly includes a light source 121 that constitutes a light emitter, a detector 123 that constitutes a light-receiving unit, a signal conversion device 125, a processing device 127 that constitutes a sensor, and a display device 129 that constitutes a reporter.

The light source 121 includes an LED, for example, and emits irradiation light including an absorption wavelength of a fluorescent compound included in the lubricating oil composition 110. The irradiation light is emitted toward a measurement target object, that is, the lubricating oil composition. For example, when the fluorescent compound absorbs light with 300 nm of wavelength and emits fluorescent light of 400 nm, the light source 121 emits the irradiation light including 300 nm of wavelength. Notably, the light source is not limited to an LED but it only has to be able to emit the irradiation light including the absorption wavelength of the fluorescent compound, and may be a fluorescent tube, an HID lamp, a CDM lamp, or the like, for example.

The detector 123 includes a photomultiplier, for example, and receives the fluorescent light emitted by the fluorescent compound to transmit, as an analog signal, an electric signal in accordance with its intensity to the signal conversion device 125. For example, when the fluorescent compound emits the fluorescent light with 400 nm of wavelength, the detector 123 receives the fluorescent light with 400 nm of wavelength to convert it into the electric signal. Notably, the detector 123 is not limited to a photomultiplier but it only has to be able to convert fluorescent light in a wavelength band including the wavelength emitted by the fluorescent compound into the electric signal, and may be a CMOS image sensor, an InGaAs image sensor, a photodiode, a phototransistor, a photoelectric tube, or the like, for example.

The signal conversion device 125 converts the analog signal output by the detector 123 into a digital signal and outputs it.

The processing device 127 is a personal computer or a portable electronic circuit device, for example, and receives the digital signal from the signal conversion device 125 to sense, on the basis of this digital signal, that is, the intensity of the fluorescent light emitted by the fluorescent compound, deterioration of the lubricating oil composition 110. A technique of sensing the deterioration is described more in detail below.

As mentioned above, the intensity of the fluorescent light emitted by the fluorescent compound correlates with the deterioration of the lubricating oil composition. When the lubricating oil composition deteriorates, the fluorescent compound also deteriorates. The deterioration of the lubricating oil composition exhibits a rise of the acid number, a fall of the base number, or a fall of the RBOT remaining lifetime, and the deterioration of the fluorescent compound exhibits a fall of the fluorescence intensity of the lubricating oil composition. Therefore, in advance, relationship between the acid number, the base number or the RBOT remaining lifetime and the fluorescence intensity is examined, and there is recorded in the processing device 127 the fluorescence intensity corresponding to the acid number or the base number at the time when it is determined that the lubricating oil composition has deteriorated, as a threshold. Then, when the fluorescence intensity of the lubricating oil composition being used becomes less than the threshold, the processing device 127 determines that the lubricating oil composition has deteriorated.

When the processing device 127 determines that the lubricating oil composition has deteriorated, the display device 129 receives a signal from the processing device 127 to display and report that externally.

Notably, not with such a threshold, relation between the acid number, the base number or the RBOT remaining lifetime and the fluorescence intensity may be examined to create a conversion expression for obtaining the acid number, the base number or the RBOT remaining lifetime from the fluorescence intensity in advance, and on the basis of the acid number, the base number or the RBOT remaining lifetime obtained from this conversion expression, the deterioration of the lubricating oil composition may be determined. In this stage, the deterioration may be determined by comparing a predetermined threshold with the obtained acid number, base number or RBOT remaining lifetime, or the deterioration may be determined in accordance with a change in acid number, base number or RBOT remaining lifetime. Otherwise, the deterioration of the lubricating oil composition may be determined in accordance with a change in fluorescence intensity.

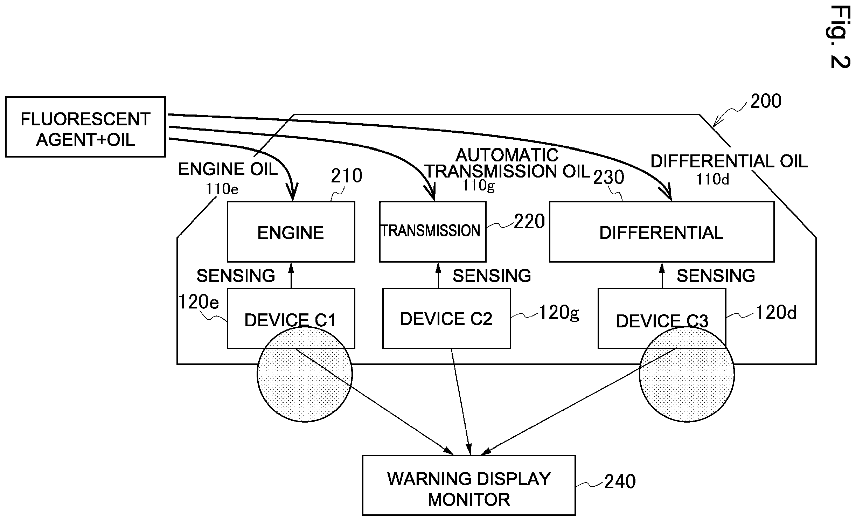

Next, an automobile 200 including a deterioration measurement system is described using Figure 2.

The automobile 200 mainly includes an engine 210, a transmission 220, a differential 230, deterioration measurement devices 120e, 120g, and 120d, and a warning display monitor (display device) 240.

A lubricating oil composition 110e including a fluorescent compound is, as what is called an engine oil, put in the engine 210. A lubricating oil composition 110g including a fluorescent compound is, as what is called a transmission oil, put in the transmission 220. A lubricating oil composition 110d including a fluorescent compound is, as what is called a differential oil, put in the differential 230. The deterioration measurement device 120e senses deterioration of the lubricating oil composition 110e held in the engine 210. The deterioration measurement device 120g senses deterioration of the lubricating oil composition 110g held in the transmission 220. The deterioration measurement device 120d senses deterioration of the lubricating oil composition 110d held in the differential 230. The deterioration measurement devices 120e, 120g, and 120d monitor or sense the lubricating oil compositions at predetermined time intervals during the operations of the engine 210, the transmission 220, and the differential 230. Each predetermined time interval is properly defined as microsecond(s), millisecond(s), second(s), minute(s), hour(s), day(s), and/or the like in accordance with the purpose of monitoring, the performance of instruments, and/or the like.

The warning display monitor 240 operates as the display device 129 connected to the deterioration measurement devices 120e, 120g, and 120d and, for example, is provided at a driver's seat. When any of the deterioration measurement devices 120e, 120g, and 120d determines that the lubricating oil composition 110e, 110g, 110d has deteriorated, the warning display monitor 240 displays the kind of the deteriorated lubricating oil composition, for example, the kind of the engine oil, the transmission oil, or the differential oil, and in addition, that the oil has deteriorated.

Notably, the instruments which the deterioration measurement devices are provided at are not limited to the above but may be instruments, including liquids, which can be targets to be monitored or sensed. Moreover, one warning display monitor 240 may be provided for the deterioration measurement devices 120e, 120g, and 120d, or may be provided for each of the deterioration measurement devices 120e, 120g, and 120d.

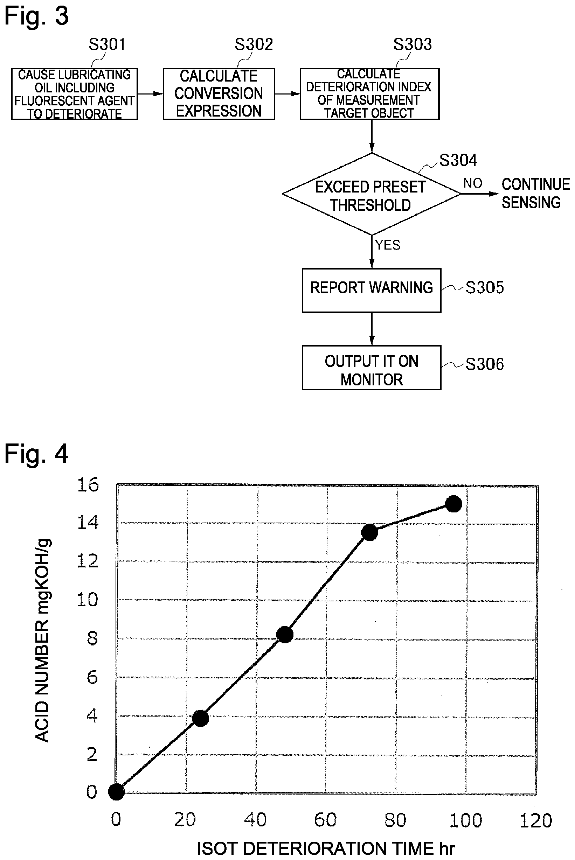

Next, a deterioration measurement method is described using Figure 3.

First, there is described using steps S301 to S303 a technique of examining relation between the acid number or the base number and the fluorescence intensity to create the threshold in advance. This technique is performed for each of combinations of the lubricating oil compositions and the fluorescent compounds.

In step S301, a lubricating oil composition is caused to undergo an oxidation deterioration test, and the acid number or the base number and the fluorescence intensity of the fluorescent compound with the deterioration are measured for every predetermined time interval.

In step S302, the conversion expression is obtained with the acid number or the base number as an independent variable and the fluorescence intensity as a dependent variable.

In step S303, there is obtained, using the conversion expression obtained in step S302, the fluorescence intensity corresponding to the acid number or the base number at the time when it is determined that the lubricating oil composition has deteriorated, and this is recorded in the processing device 127 as the threshold.

Next, there is described using steps S304 to S306 a technique of sensing the deterioration of the lubricating oil composition using the threshold.

In step S304, the irradiation light is emitted from the light source 121 toward the lubricating oil composition being used, and the fluorescent light emitted by the fluorescent compound is received by the detector 123. Then, the processing device 127 determines whether or not the intensity of the fluorescent light emitted by the fluorescent compound exceeds the threshold. Then, when the fluorescence intensity is below the threshold, the processing device 127 determines that the lubricating oil composition has deteriorated, the process being put forward to step S305. On the other hand, when the fluorescence intensity is not less than the threshold, the processing device 127 returns to step S304 to repeat the process in step S304.

In step S305, the processing device 127 transmits a signal indicating that the lubricating oil composition has deteriorated to the display device 129.

In step S306, the display device 129 receives the signal from the processing device 127 to display that the lubricating oil composition has deteriorated. Then, the process is ended.

Notably, the deterioration measurement method according to the present invention only has to at least include steps S304 to S305, and may include any of steps S301 to S303 and S306.

According to the deterioration measurement system 100 having the deterioration measurement device 120 according to an aspect of the present invention, deterioration of a lubricating oil composition can be sensed.

Moreover, as to the deterioration measurement system 100 and device 120 according to an aspect of the present invention, integrating any of them into a part of a driving monitoring system for an instrument or a device such as an engine enables the situation of progress of the deterioration of the lubricating oil composition to be monitored and evaluated continuously. Therefore, the deterioration measurement device 120 according to an aspect of the present invention can also be used as a deterioration measurement system for lubricating oil compositions in various instruments and devices. Moreover, the deterioration measurement device 120 for a lubricating oil can also sense and determine deterioration of the lubricating oil that is taken out from a vehicle, outside an instrument such as an engine without being integrated into the instrument such as an engine.

With a configuration of detecting deterioration of a lubricating oil composition with transmitted light, since the transmitted light is affected by the color of the lubricating oil composition and its transmittance is inherent depending on the lubricating oil composition, it is needed to measure, in advance, relation between the transmittance and the deterioration. On the contrary, according to the lubricating oil composition according to an embodiment of the present invention, using the fluorescent compound that emits fluorescent light on the long wavelength side, for example, not less than 300 nm and not more than 800 nm can exclude the influence of the color of the lubricating oil composition.

Moreover, with a configuration of detecting deterioration of a lubricating oil composition with transmitted light, there is occasionally a case where the intensity of the transmitted light does not correlate with the deterioration of the lubricating oil composition. On the contrary, according to the lubricating oil composition according to an embodiment of the present invention, the deterioration of the lubricating oil composition can be accurately sensed since the fluorescent compound has a property of deteriorating due to the similar deterioration factor(s) to that(those) of the lubricating oil composition, such, for example, as pressure, heat, oxygen and/or mechanical shear, catalytic action with water and metal, and/or the like, and accordingly, lowering in its fluorescence intensity, and has a property of not being affected by the other component(s) included in the lubricating oil composition, such, for example, as additive(s).

As above, since the fluorescent compound and the lubricating oil composition deteriorate due to the similar deterioration factor(s), the fluorescent compound has a property of deteriorating as the lubricating oil composition is deteriorating. In other words, the fluorescent compound has a property of deteriorating as the lubricating oil composition is deteriorating and has a property of not being affected by the other component(s) included in the lubricating oil composition, such, for example, as additive(s). The property of deteriorating as the lubricating oil composition is deteriorating is a property of deteriorating due to a part of or all of deterioration factors that are common to it and the lubricating oil composition or similar to those thereof, such, for example, as pressure, heat, oxygen and mechanical shear, catalytic action with water and metal, and the like, and accordingly, lowering in its fluorescence intensity.

Examples

Next, the present invention is described more in detail with examples, the present invention not being limited by these examples at all.

Examples 1 to 4

A lubricating oil and a fluorescent compound of the type shown in Table 1 were added and mixed in the amounts of blending shown in Table 1 to prepare the respective lubricating oil compositions. Details of the components used for preparing the lubricating oil compositions are as follows.

<Base Oil>

- "100N Mineral oil": Paraffin-based mineral oil categorized into Group III, 100°C kinematic viscosity=4.3 mm$^2$/s, viscosity index=125

For the prepared lubricating oil compositions, deteriorated oils were prepared referring to the ISOT test as below to measure the acid numbers and the fluorescence intensities. For the measurement of the acid numbers, they were measured in conformity to the potentiometric method of JIS K2501:2003. Table 1 presents the results.

(1) Preparation of Deterioration Oils

Referring to the ISOT test (150°C) in conformity to JIS K2514-1:2013, the test oils (lubricating oil compositions) as targets were forcibly caused to deteriorate without a catalyst, and for the deteriorated oils after 24 hours, after 48 hours, after 72 hours, and after 96 hours, the respective acid numbers were measured in conformity to the potentiometric method of JIS K2501:2003. As the deterioration of the lubricating oil composition progresses more, the acid number thereof rises more.

(2) Fluorescence Intensities

Using a fluorospectrophotometer including a light source and a detector, for a new oil and the deteriorated oils which were forcibly caused to deteriorate for predetermined time periods according to the ISOT test above (24-hour deteriorated oil, 48-hour deteriorated oil, 72-hour deteriorated oil and 96-hour deteriorated oil), the respective fluorescence peaks intensities of those were measured as the fluorescence intensities. The fluorospectrophotometer corresponds to the light source and the detector of the deterioration measurement device shown in Figure 1. Notably, the measurement conditions for the fluorescence intensities are as follows.

<Measurement Conditions>

- Fluorospectrophotometer: Product number FP-8600, JASCO Corporation

- Fluorescent compound: Solvent yellow 43 (absorption wavelength: 410 nm, fluorescence wavelength: 456 nm)

[Table 1]

| | | Unit | Example 1 | Example 2 | Example 3 | Example 4 | Example 5 |
|---|---|---|---|---|---|---|---|
| Lubricant Oil | | wt% | 99.9995 | 99.9995 | 99.9995 | 99.9995 | 99.9995 |
| Fluorescent Compound | | wt% | 0.0005 | 0.0005 | 0.0005 | 0.0005 | 0.0005 |
| Total | | wt% | 100.0000 | 100.0000 | 100.0000 | 100.0000 | 100.0000 |
| Oxidation Deterioration Test | | | | | | | |
| 0 hours | Acid Number | mgKOH/g | 0.04 | | | | |
| | Fluorescence Peak Intensity | - | 227.0 | | | | |
| 24 hours | Acid Number | mgKOH/g | | 3.92 | | | |
| | Fluorescence Peak Intensity | - | | 33.93 | | | |
| 48 hours | Acid Number | mgKOH/g | | | 8.24 | | |
| | Fluorescence Peak Intensity | - | | | 21.94 | | |
| 72 hours | Acid Number | mgKOH/g | | | | 13.6 | |
| | Fluorescence Peak Intensity | - | | | | 4.05 | |
| 96 hours | Acid Number | mgKOH/g | | | | | 15.1 |
| | Fluorescence Peak Intensity | - | | | | | 0.95 |

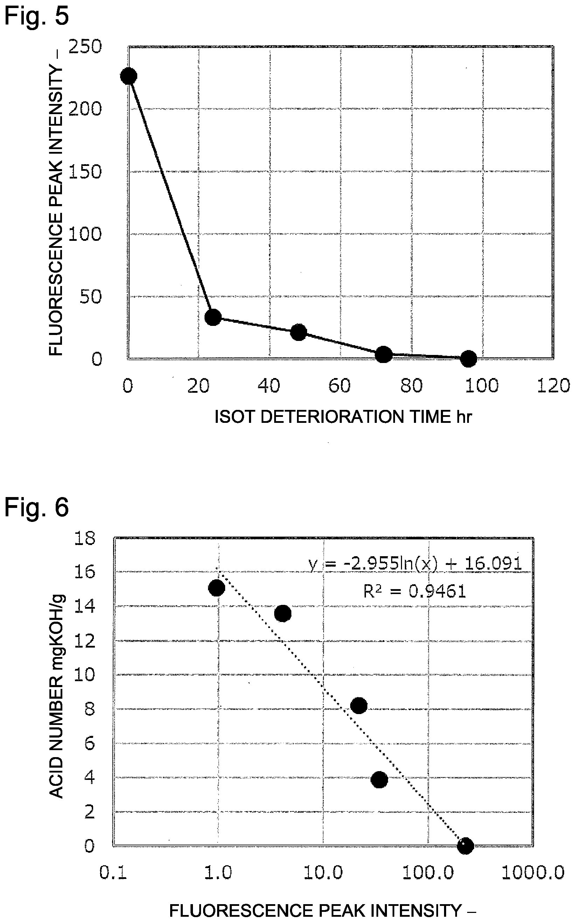

Figures 4 and 5 show the values presented in Table 1 as graphs. From Table 1, Figure 4 and Figure 5, for the lubricating oil compositions prepared in Examples 1 to 5, the acid number indicating the deterioration rises more as the test time in the ISOT test becomes longer, and simultaneously, the fluorescence peak intensity decreases more. In other words, there is found a certain correlation between the acid number and the fluorescence intensity, and it is found that the deterioration of the oil can be determined by measuring the fluorescence peak intensity.
Using the data from the examples above, the following logarithmic approximation expression 1 was obtained by the least squares method.

$$Y = -2.96\ln(x) + 16.09 \text{ (expression 1)}$$

where Y: acid number, X: fluorescence peak intensity

Referring to Figure 6, the $R^2$ value is 0.9461, and it is clear that expression 1 sufficiently approximates the data. When the fluorescence intensity of the lubricating oil composition is measured using a fluorospectrophotometer and the obtained fluorescence intensity is assigned in expression 1, the acid number of the lubricating oil composition is obtained. Thereby, the deterioration of the lubricating oil composition can be determined.

According to the deterioration measurement device, system, and method, and a lubricating oil composition for measuring deterioration of oil according to a preferable aspect of the present invention, deterioration of a lubricating oil composition used for various uses can be grasped.

Reference Signs List

| | |
|---|---|
| 100 | Deterioration measurement system |
| 110 | Lubricant oil composition |
| 120 | Deterioration measurement device |
| 121 | Light source |
| 123 | Detector |
| 125 | Signal conversion device |
| 127 | Processing device |
| 129 | Display device |
| 200 | Automobile |
| 210 | Engine |
| 220 | Transmission |
| 230 | Differential |
| 120e | Deterioration measurement device |
| 120g | Deterioration measurement device |
| 120d | Deterioration measurement device |
| 240 | Warning display monitor (display device) |

## Claims

1. A lubricating oil composition comprising a fluorescent compound that emits fluorescent light, wherein the fluorescent compound has a property of deteriorating with relevance to deterioration of the lubricating oil composition.

2. The lubricating oil composition according to Claim 1, wherein the fluorescent compound is a heteroaromatic compound such as a coumarin-based compound, a rhodamine-based compound, or an auramine-based compound, or a carbon aromatic compound such as a terphenyl-based compound.

3. The lubricating oil composition according to Claim 1 or 2, wherein a wavelength of the fluorescent light emitted by the fluorescent compound is not less than 300 nm and not more than 800 nm.

4. The lubricating oil composition according to any one of Claims 1 to 3, wherein a ratio of the fluorescent compound in the lubricating oil composition is not less than 0.1 mass ppm and not more than 100 mass ppm relative to a total amount of the lubricating oil composition.

5. A deterioration measurement device comprising:

   a light emitter that emits irradiation light toward a measurement target object including a fluorescent compound that emits fluorescent light upon reception of the irradiation light;
   a light receiver that receives the fluorescent light emitted by the fluorescent compound and transmits a signal in accordance with the received fluorescent light; and
   a sensor that senses deterioration of the measurement target object on the basis of the signal transmitted by the light-receiving unit.

6. The deterioration measurement device according to Claim 5, wherein the fluorescent compound is a coumarin-based compound, a rhodamine-based compound, an auramine-based compound, or a terphenyl-based compound.

7. The deterioration measurement device according to Claim 5 or 6, wherein the light emitter includes an LED, a fluorescence tube, an HID lamp, or a CDM lamp.

8. The deterioration measurement device according to any one of Claims 5 to 7, wherein the light receiver includes a photomultiplier, a CMOS image sensor, an InGaAs image sensor, a photodiode, a phototransistor, or a photoelectric tube.

9. The deterioration measurement device according to any one of Claims 5 to 8, wherein the light receiver measures a fluorescence intensity of the fluorescent light emitted by the fluorescent compound.

10. The deterioration measurement device according to any one of Claims 5 to 9, wherein the sensor senses that the lubricating oil composition has deteriorated, when a fluorescence intensity of the fluorescent light emitted by the fluorescent compound is less than a predetermined threshold.

11. The deterioration measurement device according to any one of Claims 5 to 10, further comprising a reporter that externally reports that the lubricating oil composition has deteriorated, when the sensor determines that the lubricating oil composition has deteriorated.

12. A deterioration measurement system comprising: the lubricating oil composition according to any one of Claims 1 to 4; and the deterioration measurement device according to any one of Claims 5 to 11.

13. An automobile comprising the deterioration measurement device according to any one of Claims 5 to 11.

14. A deterioration measurement method comprising:

a step of emitting irradiation light toward a measurement target object including a fluorescent compound that emits fluorescent light in response to the irradiation light;
a step of receiving the fluorescent light emitted by the fluorescent compound;
a step of transmitting a signal in accordance with the received fluorescent light; and
a step of sensing deterioration of the lubricating oil composition on the basis of the transmitted signal.

# Fig. 1

Fig. 2

# Fig. 3

```
       S301                    S302                    S303
┌──────────────────┐   ┌──────────────┐   ┌────────────────────┐
│ CAUSE LUBRICATING│   │              │   │      CALCULATE     │
│   OIL INCLUDING  │   │  CALCULATE   │   │ DETERIORATION INDEX│
│ FLUORESCENT AGENT├──▶│  CONVERSION  ├──▶│  OF MEASUREMENT    │
│   TO DETERIORATE │   │  EXPRESSION  │   │   TARGET OBJECT    │
└──────────────────┘   └──────────────┘   └────────────────────┘
                                                     │
                                                     ▼
                                              ╱──────────────╲    S304
                                             ╱                ╲   NO     CONTINUE
                                            ╱  EXCEED PRESET   ╲─────────▶ SENSING
                                            ╲    THRESHOLD     ╱
                                             ╲                ╱
                                              ╲──────────────╱
                                                     │
                                                     │ YES
                                                     ▼
                                            ┌──────────────────┐
                                            │ REPORT WARNING   ├── S305
                                            └──────────────────┘
                                                     │
                                                     ▼
                                            ┌──────────────────┐
                                            │  OUTPUT IT ON    ├── S306
                                            │    MONITOR       │
                                            └──────────────────┘
```

# Fig. 4

Fig. 5

Fig. 6

**EP 4 108 746 A1**

<table>
<tr><th colspan="2">INTERNATIONAL SEARCH REPORT</th><th colspan="2">International application No.<br>PCT/JP2020/047346</th></tr>
</table>

A. CLASSIFICATION OF SUBJECT MATTER
Int.Cl. C10M171/00(2006.01)i, C10N20/00(2006.01)n, C10N30/00(2006.01)n,
C10M127/04(2006.01)i, C10M129/20(2006.01)i, C10M129/70(2006.01)i,
C10M133/12(2006.01)i, G01N21/64(2006.01)i
FI: C10M171/00, C10M133/12, C10M129/70, C10M127/04, C10M129/20,
G01N21/64Z, C10N30:00Z, C10N20:00Z
According to International Patent Classification (IPC) or to both national classification and IPC

B. FIELDS SEARCHED

Minimum documentation searched (classification system followed by classification symbols)
Int.Cl. C10M171/00, C10N20/00, C10N30/00, C10M127/04, C10M129/20,
C10M129/70, C10M133/12, G01N21/64

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | US 2006/0128025 A1 (BANAVALI, R. M.) 15 June 2006 (2006-06-15), example 5, claim 1, paragraphs [0017], [0025] | 1-5, 7-14<br>6 |
| X<br><br>A | US 2003/0141459 A1 (HEGAZI, E. M.) 31 July 2003 (2003-07-31), example 3, fig. 16A-16C, claim 12, paragraph [0089] | 1-5, 7-9, 11-14<br>6, 10 |
| X<br>Y | US 6327897 B1 (MAINSTREAM ENGINEERING CORPORATION) 11 December 2001 (2001-12-11), column 9, lines 25-49 | 1-5<br>1-4, 6, 12 |

☒ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
05 February 2021

Date of mailing of the international search report
22 February 2021

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

**INTERNATIONAL SEARCH REPORT**

| | International application No. |
|---|---|
| | PCT/JP2020/047346 |

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2013-209592 A (IDEMITSU KOSAN CO., LTD.) 10 October 2013 (2013-10-10), example 4, paragraph [0033] | 1-5 |
| Y | paragraphs [0030], [0031] | 1-4, 6, 12 |
| X | JP 2011-117348 A (ISUZU MOTORS LTD.) 16 June 2011 (2011-06-16), claims 1, 4, paragraphs [0036], [0038], [0039] | 5, 7-11, 13-14 |
| Y | | 1-4, 6, 12 |
| X | JP 2019-511728 A (SAUDI ARABIAN OIL COMPANY) 25 April 2019 (2019-04-25), claims 1-2, 6, paragraph [0002] | 5, 7-9, 11, 13-14 |
| A | | 6, 10, 12 |
| X | JP 2011-133370 A (HORIBA LTD.) 07 July 2011 (2011-07-07), claims 1, 3, paragraph [0001] | 5, 7-9, 11, 13-14 |
| A | | 6, 10, 12 |
| A | JP 11-097779 A (SONY CORPORATION) 09 April 1999 (1999-04-09), fig. 3(b), paragraph [0066] | 3 |

Form PCT/ISA/210 (second sheet) (January 2015)

| | | |
|---|---|---|
| US 2006/0128025 A1 | 15 June 2006 | EP 1672052 A1 |
| US 2003/0141459 A1 | 31 July 2003 | (Family: none) |
| US 6327897 B1 | 11 December 2001 | (Family: none) |
| JP 2013-209592 A | 10 October 2013 | US 2015/0038381 A1 example 4, paragraphs [0049], [0050], [0052] WO 2013/146523 A1 EP 2832835 A1 CN 104169408 A KR 10-2014-0139517 A |
| JP 2011-117348 A | 16 June 2011 | (Family: none) |
| JP 2019-511728 A | 25 April 2019 | US 2017/0205387 A1 claims 1-2, 6, paragraph [0002] WO 2017/127515 A1 EP 3405774 A1 CN 108603838 A KR 10-2018-0104019 A |
| JP 2011-133370 A | 07 July 2011 | US 2011/0155925 A1 claims 1, 3, paragraph [0002] EP 2339330 A2 |
| JP 11-097779 A | 09 April 1999 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015060457 A